# EUROPÄISCHE PATENTANMELDUNG

(11) **EP 1 441 075 A2**
(43) Veröffentlichungstag der Anmeldung: **28.07.2004**
(21) Anmeldenummer: 04000965.6
(22) Anmeldetag: 19.01.2004
(51) Int. Cl.: E01H 12/00, E02B 15/04

(54) **Vorrichtung zur Aufnahme von kontaminierenden Substanzen**

(30) Priorität: 20.01.2003 DE 10302309
(71) Anmelder: B+F Baumaschinen und Factoring AG, 3930 Visp (CH)
(72) Erfinder:
(74) Vertreter: Griepenstroh, Jörg

(57) **Zusammenfassung**

Die Erfindung betrifft eine Vorrichtung zur Aufnahme von kontaminierenden Substanzen, insbesondere von Öl, welche gegenüber einer kontaminierten Oberfläche (15) relativ verlagerbar ist, umfassend einen Sammelbehälter (5) und eine dem Sammelbehälter (5) vorgelagerte motorisch angetriebene Rotorwalze (2), die umfangsseitig mit Aufnahmekörpem (35) besetzt ist. Die Aufnahmekörper befördern durch die quer zur Längsachse (LA1) der Rotorwalze (2) ausgeführte Relatiwerlagerung in Arbeitsrichtung und die Rotationsbewegung der Rotorwalze (2) die kontaminierten Substanzen (28) in den Sammelbehälter (5). Die Rotorwalze (2) ist in einem Walzenrahmen (3) gehalten, der wiederum schwenkbeweglich gegenüber einem Tragrahmen (4) gelagert ist und wobei zur schwimmenden Lagerung der Rotorwalze (2) eine zumindest mittelbar gegen die Schwerkraft (S) der Rotorwalze (2) gerichtete einstellbare Federkraft (F) zwischen dem Walzenrahmen (3) und dem Tragrahmen (4) wirkt.

## Beschreibung

Die Erfindung betrifft eine Vorrichtung zur Aufnahme von kontaminierenden Substanzen, insbesondere zur Aufnahme von Öl.

Nach Tankerhavarien kommt es immer wieder zu erheblichen Umweltverschmutzungen durch Erdöl und Erdölprodukten. Wasserflächen werden durch die geringere Dichte der Erdölprodukte durch schwimmende Ölteppiche belastet. Dies führt femer zur Verschmutzung von Ufern und Küstenabschnitten mit gravierenden Auswirkungen auf die Ökologie des Küstenbereichs. Dramatische Auswirkungen sind gegeben, wenn ein Ölteppich anlandet und Flora und Fauna in den betroffenen Abschnitten auf lange Sicht nachhaltig schädigt.

Zur Bekämpfung derartiger Ölteppiche sind schwimmende Barrieren bekannt, die das auslaufende Öl zurückhalten sollen, bis es einer Entsorgung zugeführt werden kann. Ferner sind Ölbindemittel bekannt.

Ein Anlanden des Ölteppiches kann insbesondere bei hohem Wellengang durch diese Maßnahmen nur begrenzt verhindert werden. Wenn es jedoch erst einmal zu einer Kontamination eines Küstenstreifens gekommen ist, lassen sich die häufig hoch zähen Erdölprodukte nur sehr aufwändig manuell entfernen. Ein Abpumpen ist aufgrund der niedrigen Viskosität von Erdölprodukten bedingt durch die in der Regel niedrigen Meerwassertemperaturen in der Regel nicht möglich.

Aus der DE 101 13 703 A1 ist ein Verfahren zur Steuerung der Arbeitstiefe eines Aufnahmebereichs einer fahrebaren Reinigungsvorrichtung für lockeren Untergrund bekannt, wobei der Aufnahmebereich zum Erfassen eines Untergrund/Schmutzgemisches relativ zum Untergrund abgesenkt oder angehoben wird. Die Oberflächenkontur des Untergrunds - in Fahrtrichtung vor dem Aufnahmebereich - wird erfasst und dementsprechend der Aufnahmebereich abgesenkt, angehoben oder auf gleichem Niveau bleibend angesteuert. Dieses Verfahren ist für den Einsatz bei Strandreinigungsfahrzeugen vorgesehen.

In der EP 0 450 913 A1 wird ein Reinigungsfahrzeug mit einer in einem Rahmen gehaltenen Aufnahmewalze offenbart, wobei der Rahmen zur Höhenveränderung schwenkbeweglich gelagert ist. Ein solcher Rahmen ist auch bei einer Sandreinigungsmaschine vorgesehen, wie sie Gegenstand der DE 81 32 840 U1 ist. Des Weiteren zählt durch die DE-OS 2 113 271 eine Vorrichtung zur Aufnahme fester und plastischer Verunreinigungen vom Boden, insbesondere von Badestränden, zum Stand der Technik. Hierbei sind an einer Walze eine Vielzahl von Fingern befestigt, die den Boden durchkämmen. Eine ähnliche Anordnung ist aus der US 3 000 448 bekannt.

Für ein gutes Reinigungsergebnis ist eine exakte Tiefenführung der Rotorwalze wesentlich.

Der Erfindung liegt hiervon ausgehend die Aufgabe zugrunde, eine Vorrichtung zur Aufnahme von kontaminierenden Substanzen, insbesondere von Erdölprodukten bereitzustellen, die eine verbesserte Tiefenführung der Rotorwalze ermöglicht, wodurch die wirksame Reinigung geeigneter Küstenabschnitte effektiv durchgeführt werden kann.

Die Erfindung löst diese Aufgabe durch eine Vorrichtung mit den Merkmalen des Patentanspruchs 1.

Die erfindungsgemäße Vorrichtung wird gegenüber einer kontaminierten Oberfläche, beispielsweise einem Strandabschnitt, relativ verlagert und umfasst einen Sammelbehälter zur Aufnahme der kontaminierten Substanzen. Dem Sammelbehälter ist eine motorisch angetriebene Rotorwalze vorgelagert, die umfangsseitig mit Aufnahmekörpern besetzt ist. Durch die Rotationsbewegung der Rotorwalze sowie die Relativbewegung gegenüber der kontaminierten Oberfläche befördern die die kontaminierte Oberfläche kontaktierenden Aufnahmekörper die kontaminierenden Substanzen, insbesondere Ölklumpen, in den nachgeschalteten Sammelbehälter. Die Rotorwalze ist dabei in einem Walzenrahmen gehalten, der schwenkbeweglich gegenüber einem Tragrahmen gelagert ist. Gleichzeitig wirkt zur schwimmenden Lagerung der Rotorwalze, das heißt zur Einstellung der Aufnahmetiefe eine zumindest mittelbar gegen die Schwerkraft der Rotorwalze gerichtete einstellbare Federkraft zwischen dem Walzenrahmen und dem Tragrahmen.

Der Vorteil ist, dass bei Einsatz der erfindungsgemäßen Vorrichtung die manuelle Entfernung der Substanzen, die letztendlich auch eine Gefährdung für die Reinigungskräfte darstellt, entfällt und bei hoher Flächenleistung durch die Vorrichtung ausgeführt werden kann. Dabei ist es auch möglich, hochkontaminierte Substanzen, wie beispielsweise radioaktives Material, mit der erfindungsgemäßen Vorrichtung aufzunehmen ohne mit diesen in Berührung zu kommen. Bei einer optimal eingestellten Vorrichtung ist ein Aussieben von Ölklumpen insbesondere im Sand möglich. Die Aufnahmetiefe ist dabei exakt einstellbar, so dass nicht unnötig Bodenmaterial abgetragen wird.

Zusätzlich oder optional kann das Schwenklager zwischen Walzenrahmen und Tragrahmen lageveränderbar sein. Es ist im Rahmen der Erfindung möglich, das Schwenklager derart zu verlagern, dass die Rotorwalze mehr oder weniger tief in die Oberfläche eingreift. Die Lageveränderung kann durch Bohrraster im Walzenrahmen und/oder im Tragrahmen in Stufen möglich sein. Es ist im Rahmen der Erfindung aber auch denkbar, dass der Walzenrahmen und/oder der Tragrahmen stufenlos teleskopierbar sind. Die Längenveränderung kann in diesem Fall durch einen Hubzylinder erfolgen, Das hat zudem den Vorteil, dass der Bediener das Kraftfahrzeug für die Verstellung der Vorrichtung nicht verlassen muss.

Es ist möglich, dass bei dickschichtigen Ölablagerungen lediglich die Ölablagerung selbst in Eingriff mit dem Aufnahmekörper kommt, während die Oberfläche im wesentlichen unberührt bleibt. D.h. die Rotorwalze kommt selbst nicht oder nur minimal mit der Oberfläche in Verbindung. Selbstverständlich kann bei Geländeunebenheiten ein Kontakt der Rotorwalze mit der Oberfläche insbesondere dem Boden stattfinden.

Die erfindungsgemäße Vorrichtung ist insbesondere als Frontanbaugerät für ein Kraftfahrzeug konzipiert (Patentanspruch 2). Das Kraftfahrzeug ist vorzugsweise ein Radlader. Der Frontanbau hat den Vorteil, dass das Antriebsfahrzeug insbesondere der Radlader, nur über die bereits gereinigte Oberfläche fährt, ohne selbst mit der kontaminierten Substanz in Berührung zu kommen.

Die Bodenplatte des Sammelbehälters ist eben und wird parallel zu der kontaminierten Oberfläche geführt. Die Parallelführung wird einerseits durch die ebene Bodenplatte unterstützt und zum anderen durch die sogenannte Schaufelschwimmstellung der Radladerhydraulik, d.h. die Höhenlage der Vorrichtung ist nicht starr durch die Radladerhydraulik bestimmt, sondern ist gegenüber dem Radlader selbsttätig relativ verlagerbar.

Ferner ist durch die Fronthydraulik des Radladers ein Anheben der gesamten Vorrichtung zur Entleerung des Sammelbehälters in einen Container möglich. Weiterhin ist über einen Ölkreislauf des Radladers ein ölmotorischer Antrieb der Rotorwalze möglich. Wesentlich für ein gutes Reinigungsergebnis ist die exakte Tiefenführung der Rotorwalze, die zum einen durch eine schwimmende Lagerung erreicht wird, wobei die Schwerkraft der Rotorwalze durch eine einstellbare Federkraft zumindest teilweise aufgehoben wird. Dadurch liegt die Rotorwalze nicht mit ihrem eigenen Gewicht auf der kontaminierten Oberfläche auf. Grundsätzlich kann die Rotorwalze durch die schwenkbewegliche Lagerung gegenüber dem Tragrahmen nach oben ausweichen. Dies schützt die Rotorwalze unter anderem auch vor Beschädigungen, beispielsweise vor Gestein in der zu reinigenden Oberfläche.

Nach Patentanspruch 3 ist der Tragrahmen gegenüber dem Sammelbehälter hydraulisch verschwenkbar. Der Tragrahmen ist vorzugsweise an dem der Rotorwalze abgewandten Ende des Sammelbehälters an diesem angelenkt, so dass sich der Tragrahmen mit dem daran angelenkten Walzrahmen im wesentlichen über den Sammelbehälter hinaus erstreckt. Zur Entleerung des Sammelbehälters kann der Tragrahmen über den Gelenkpunkt nach oben geschwenkt werden, wobei an dem Tragrahmen oder dem Walzenrahmen ein Mitnehmer vorgesehen ist, über den gleichzeitig auch der Walzenrahmen mit der Rotorwalze angehoben wird. Dadurch ist die der Rotorwalze zugewandte Vorderseite des Sammelbehälters zu öffnen und eine Entleerung in einem Container möglich.

Gegenstand des Patentanspruchs 4 sind seitlich der Rotorwalze angeordnete Stützmittel, die nach den Merkmalen des Patentanspruchs 5 mit dem Walzenrahmen gekoppelt sind. Die Stützmittel, insbesondere Stützkufen oder Stützräder, dienen einer exakten Niveauführung der Rotorwalze. Stützkufen schleifen bei der Vorwärtsbewegung der Vorrichtung über den Boden und legen dadurch das Höhennivenau der Rotorwalze exakt fest, um die Aufnahme nicht kontaminierten Materials so weit wie möglich zu verhindern. Die Höhe der Stützkufen kann über eine verstellbare Spindel geregelt werden. Gleiches gilt bei rollender Bewegung für Stützräder.

Nach Patentanspruch 6 besitzt die Rotorwalze Aufnahmekörper, die in eine erste und zweite Gruppe gegliedert sind. Die Aufnahmekörper der ersten und zweiten Gruppe sind in zueinander gegenläufigen Wendeln angeordnet. Durch die wendelförmige oder auch schraubenlinienförmige Anordnung ist bei gleichbleibender Drehrichtung der Rotorwalze ein Materialtransport zur Mitte der Rotorwalze und damit zur Mitte des Sammelbehälters möglich. Bei Umkehrung der Drehrichtung wird aufgenommenes Material von der Mitte der Rotorwalze nach außen transportiert.

Grundsätzlich ist die Drehrichtung der Rotorwalze umkehrbar. Da es als zweckmäßig angesehen wird, Material grundsätzlich im mittleren Bereich des Sammelbehälters zu sammeln, ist es jedoch möglich, die Rotorwalze aufgrund ihrer Konfiguration gemäß Patentanspruch 6 umzustecken, so dass auch bei einer Drehrichtungsumkehr ein Materialtransport zur Mitte der Rotorwalze möglich ist. Die Rotorwalze kann entweder direkt von einem Ölmotor angetrieben werden oder unter Zwischenschaltung weiterer Getriebeglieder, beispielsweise von Ketten oder Zahnriemen, durch die auch die Drehzahl der Rotorwalze gesteuert werden kann. Die Drehzahl der Rotorwalze ist stufenlos regelbar. Der Hydraulikkreis kann durch ein Überdruckventil gesichert sein, das bei einer Überlastung der Rotorwalze, z.B. durch Fremdkörpereingriff, auslöst. Fremdkörper können durch Drehrichtungsumkehr entfernt werden. Größere Fremdkörper sollten vor der Weiterfahrt namuell entfernt werden.

Kontaminierende Substanzen, insbesondere Erdölprodukte geringer Viskosität können je nach Höhe der Ablagerungen entweder unter die Rotorwalze hindurch in den Sammelbehälter gefördert werden. Diese Vorgehensweise bietet sich insbesondere bei sehr dicken Schichten an, wobei die Aufnahmekörper nur sehr gering in die kontaminierte Oberfläche eindringen. Bei umgekehrter Drehrichtung werden beispielsweise Ölklumpen über die Längsachse der Rotorwalze hinweg in den Sammelbehälter geführt. Diese Vorgehensweise bietet sich an, wenn nur einzelne Ölklumpen, beispielsweise auf einem Strand vorhanden sind und diese gewissermaßen aus dem Sand herausgekämmt werden sollen. Die optimale Drehzahl ist abhängig von der Fließfähigkeit der kontaminierenden Substanzen, dem Untergrund und ist je nach Anwendungsfall individuell steuerbar.

Nach den Merkmalen des Patentanspruchs 7 sind die Aufnahmekörper radial von einer Rotortrommel abstehende lösbar befestigte Rundbolzen mit glatter Oberfläche. Zur Gewichtsreduzierung besteht die Rotorwalze vorzugsweise aus einer Rotortrommel, die als Hohlwelle konfiguriert ist. Als Rotorwelle kann ein geeignetes Rohr verwendet werden. Der Rotortrommel sind endseitige Lagerzapfen zugeordnet. Die lösbare Befestigung der Rundbolzen hat den Vorteil, dass einzelne Rundbolzen, beispielsweise bei Beschädigung oder Verschleiß, ausgetauscht werden können. Ihre glatte Oberfläche mindert die Gefahr, dass sich Anbackungen bilden, die die Reinigungsleistung der Vorrichtung beeinträchtigen.

Besonders einfach lässt sich eine lösbare Verbindung dadurch realisieren, dass die Rundbolzen über ein endseitiges Außengewinde mit der Rotortrommel verschraubt sind (Patentanspruch 8). Bei dieser Konfiguration können die Rundbolzen entweder mit auf der Rotortrommel befestigten, insbesondere verschweißten Muttern verschraubt werden, wobei eine Drehsicherung durch Verkeilen gegenüber der Rotorwalzenoberfläche hergestellt werden kann. Die radial abstehenden Rundbolzen können auch durch Kontermuttern unter Eingliederung von Sicherheitsringen gegen Verlust gesichert werden. Selbstverständlich sind zusätzliche Sicherungsmittel, die innerhalb des Gewindes wirken, möglich, wie Teflonband oder geeignete Klebstoffe. Die Rundbolzen besitzen vorzugsweise eine Dicke von 20 mm und eine Länge von 100 mm.

Die in Anspruch 9 beschriebene Wasserbedüsung der Rotorwalze und/oder des Sammelbehälters dient dazu, Anbackungen an der metallischen Rotorwalze zu verhindern. Der Wasserbedüsung können zusätzlich Lösungsmittel zugesetzt sein, durch welche der Sammelbehälter und/oder die Rotorwalze während und/oder nach einem Einsatz gereinigt werden können. Die notwendige Reinigungsflüssigkeit, insbesondere Wasser, wird in einem Tank mitgeführt, der bei einem Radlader vorzugsweise im Heckbereich angeordnet ist. Dies führt zu einer gleichmäßigeren Verteilung der Achslasten und zur Verbesserung der Manövrierfähigkeit des Radladers. Ferner wird die Sicht auf das Frontanbaugerät nicht behindert. Eine Bedüsung der Rotorwalze und/oder des Sammelbehälters führt zudem zu einer Bindung freier Stäube und damit zu einer Reduzierung der Umweltbelastung beim Einsatz der beanspruchten Vorrichtung.

Als Frontanbaugerät im Sinne der Erfindung sind solche Geräte zu verstehen, die während des Einsatzes vor dem Kraftfahrzeug hergeführt werden. Selbstverständlich ist es auch denkbar, eine entsprechende Vorrichtung heckseitig eines dafür geeigneten Kraftfahrzeugs vorzusehen, wenn die Arbeitsrichtung dieses Kraftfahrzeugs rückwärts ist. Wesentlich ist, dass das Kraftfahrzeug nur über die gereinigte Oberfläche fährt. Daher ist es im Rahmen der erfindungsgemäßen Vorrichtung zweckmäßig, die Arbeitsbreite der Vorrichtung etwas größer zu bemessen als die Breite des Kraftfahrzeugs. Beispielsweise kann bei einer Kraftfahrzeugbreite von 2 m die Vorrichtung eine Arbeitsbreite von 2,20 m haben. Selbstverständlich können auch größere Arbeitsbreiten realisiert sein.

In der Ausführungsform des Patentanspruchs 10 werden der Sammelbehälter und/oder die Rotorwalze beheizt, wobei als Wärmequelle Verbrennungsgase genutzt werden können (Patentanspruch 11). Die Verbrennungsgase können von dem antreibenden Kraftfahrzeug stammen oder von zusätzlich angebrachten Brennern. Die Beheizung und damit Temperaturerhöhung im Sammelbehälter und der Rotorwalze soll dazu beitragen, die Viskosität des aufgenommenen Materials zu erhöhen, insbesondere wenn es sich hierbei um ein Erdölprodukt handelt, um auf diesem Weg Anbackungen zu verhindern.

Nach Patentanspruch 12 ist in den Sammelbehälter benachbart zur Rotorwand eine Trennwand eingesetzt. Diese Trennwand ist dann erforderlich, wenn die kontaminierenden Substanzen oben über die Längsachse der Rotorwalze in den Sammelbehälter befördert werden. Die Trennwand verhindert das Auslaufen des bereits gesammelten Materials. Die Trennwand ist vorzugsweise lösbar befestigt und kann beispielsweise bei Drehrichtungsumkehr der Rotorwalze entfernt werden oder auch zwecks Entleerung des Sammelbehälters. Die Trennwand kann an dem Tragrahmen befestigt sein, damit sie beim Verschwenken des Tragrahmens das Innere des Sammelbehälters zur Entleerung freigibt.

In vorteilhafter Ausgestaltung des Erfindungsgedankens umfasst die Vorrichtung ein auf einer Tragrolle bevorratetes Bandmaterial zur Auskleidung des Sammelbehälters (Patentanspruch 13). Die Tragrolle kann bespielsweise zwischen zueinander parallelen Holmen des Tragrahmens angeordnet sein, wobei der Abstand der Holme etwa der Länge der Rotorwalze und damit der Breite des Sammelbehälters entspricht. D.h. das Bandmaterial besitzt etwa die gleiche Breite wie der Sammelbehälter. Das Bandmaterial kann eine Folie oder ein Vlies sein, dass den Sammelbehälter vor Anhaftungen der kontaminierenden Substanzen schützt und bei Entleerung zusammen mit diesen entsorgt wird. Hierzu kann das Bandmaterial manuell oder automatisch abgeschnitten werden und anschließend durch Abrollen von der Tragrolle zur erneuten Auskleidung des Sammelbehälters dienen.

Gemäß Patentanspruch 14 ist der Rotorwalze zumindest auf einem Teilbereich ihres Umfangs ein Abdeckblech zugeordnet. Das Abdeckblech dient in gewisser Weise als Leitblech um zu verhindern, dass von der Rotorwalze aufgenommenes Material von der Fliehkraft weggeschleudert wird. Vorzugsweise ist der Abstand zwischen dem Abdeckblech und der Rotorwalze sehr gering. Insbesondere ist das Abdeckblech an die Kontur der Rotorwalze angepasst und für Wartungsarbeiten leicht entfernbar. Das Abdeckblech erstreckt sich vorzugsweise im vorderen Bereich, d.h. dem dem Sammelbehälter abgewandten Bereich etwa von der Horizontalen bis zum oberen Scheitelpunkt der Rotorwalze. Die vordere untere Kante ist vorzugsweise durch eine höhenverstellbare Gummischürze verlängert, die ebenfalls dazu beiträgt, bei einer entgegen der Relativverlagerung der Vorrichtung drehenden Rotorwalze ein Umherschleudem von Material zu verhindern und eine Staubentwicklung zu vermeiden.

Zusätzlich zu der Verwendung von Aufnahmekörpem mit möglichst glatter Oberfläche ist es möglich, einen Abstreifer vorzusehen, der mit den Aufnahmekörpern in kämmendem Eingriff steht. Der Abstreifer ist am Walzenrahmen befestigt (Patentanspruch 15).

In vorteilhafter Weiterentwicklung ist nach den Merkmalen des Patentanspruchs 16 vor der Rotorwalze durch Leitbleche eine trichterförmige Mündung ausgebildet. Die Leitbleche können anstelle von oder in Ergänzung zu den Stützmitteln seitlich der Rotorwalze angeordnet sein, wodurch in gewissen Grenzen die Arbeitsbreite der Vorrichtung vergrößert wird.

Dieser Aspekt kommt insbesondere dann zum tragen, wenn die kontaminierte Oberfläche keine Landfläche ist, sondern eine Wasserfläche. Die Vorrichtung eignet sich nämlich auch zur Aufnahme von kontaminierenden Substanzen, die auf Wasser schwimmen, wobei die Wassertiefe etwa bis 50 cm, vorzugsweise bis 20 cm beträgt. Da bei einem Einsatz im Wasser insbesondere zur Aufnahme von schwimmenden Substanzen, wie Erdölprodukten zugleich Wasser mit in den Sammelbehälter gelangt, können an dem Sammelbehälter Austrittsöffnungen für das Wasser vorgesehen sein. Hierbei schwimmen die kontaminierenden Substanzen auf dem Wasserspiegel innerhalb des Sammelbehälters und werden dort zurückgehalten. Anstelle der Trennwand gemäß Patentanspruch 12 können hier entsprechende Rückhaltebleche vorgesehen sein, mit tiefliegenden Austrittsöffnungen für das Wasser.

Beim Einsatz in Salzwasser ist aus Gründen der Korrosionsbeständigkeit die Lagerung der Rotorwalze in Lagerschalen aus Kunststoff zweckmäßig. Zusätzlich kann eine geeignete Kapselung der Lager vorgesehen sein.

Die trichterförmige Mündung vor der Rotorwalze kann lediglich seitlich der Rotorwalze ausgebildet sein. Zusätzlich können die beiden seitlichen Leitbleche noch durch ein diese verbindendes oberes Leitblech miteinander gekoppelt sein. Beim Einsatz in niedrigen Wassertiefen können als Kraftfahrzeug leistungsstarke Radlader, insbesondere auch Kettenfahrzeuge, zum Einsatz kommen. Sollte die Vorrichtung Ölschlamm aus Wasser entnommen haben, so ist dieses Öl-Wasser-Gemisch durch Auskippen in einen Spezialcontainer zu entsorgen. In diesem Spezialcontainer findet dann die letztendliche Ölabscheidung statt.

Eine weitere vorteilhafte Variante der Erfindung ist Gegenstand der Patentansprüche 17 bis 21. Die erfindungsgemäße Vorrichtung ist nicht nur an Land, sondern auch Off-shore zur Aufnahme von kontaminierenden Substanzen einsetzbar. Die notwendige Schwimmfähigkeit soll nach den Merkmalen des Patentanspruchs 17 durch Schwimmkörper hergestellt werden. Die Schwimmkörper können seitlich oder bezogen auf die Arbeitsrichtung hinter dem Sammelbehälter angebracht sein. Die Vorrichtung wird dabei von einem Schiff durch das Wasser gezogen. Beispielsweise kann die Vorrichtung über Zugmittel an einem Kran befestigt sein, der die Vorrichtung zu Wasser lässt. Die Energieversorgung erfolgt ebenfalls über das Schiff. Hierbei ist beispielsweise auch ein elektromotorischer Antrieb der Rotorwalze denkbar.

Als vorteilhaft wird es angesehen, wenn die Arbeitshöhe der Rotorwalze durch Schwimmkörper eingestellt ist. Insbesondere sind die Schwimmkörper an dem Walzenrahmen befestigt, so dass die Rotorwalze dem Wellengang folgend immer in der optimalen Arbeitshöhe gehalten ist und somit eine optimale Abtragung der kontaminierenden Substanzen möglich ist.

Ähnlich den Leitblechen können die Schwimmkörper eine die Arbeitsbreite der Vorrichtung vergrößernde Geometrie aufweisen. Insbesondere können die Schwimmkörper derart angeordnet sein, dass ein Trichter vor der Rotorwalze ausgebildet ist (Patentanspruch 19).

Nach Patentanspruch 20 befindet sich der Sammelbehälter teilweise unterhalb der Wasserlinie, wobei unterhalb der Wasserlinie wenigstens eine Wasseraustrittsöffnung im Sammelbehälter vorgesehen ist. Die Wasseraustrittsöffnung dient einerseits zum Niveauausgleich des Behälterinhalts und zum anderen zur Verdrängung von Wasser aus dem Sammelbehälter, wenn auf dem Wasser schwimmendes Öl den Wasserspiegel innerhalb des Sammelbehälters nach unten drückt.

Der Sammelbehälter ist in allen zuvor genannten Ausführungsformen vorzugsweise an seiner Oberseite verschließbar ausgeführt (Patentanspruch 21). An Land wird hierdurch das Entweichen kontaminierender Substanzen sowie die Staubentwicklung reduziert. Auf See schützt eine verschlossene Oberseite des Sammelbehälters vor Brandung und damit vor dem Verlust bereits aufgenommener kontaminierender Substanzen.

Ein weiterer wesentlicher Aspekt ist, dass die erfindungsgemäße Vorrichtung an Land auch mit einem ferngesteuerten Kraftfahrzeug zum Einsatz gelangen kann. Diese Konstellation ist zweckmäßig, wenn die kontaminierenden Substanzen für den menschlichen Körper extrem toxisch oder auch radioaktiv sind. Bei weniger gefährlichen Substanzen ist es auch möglich, die Fahrerkabine des Kraftfahrzeugs mit einer sogenannten Schwarz-Weiß-Anlage auszurüsten, die den Fahrer vor allen relevanten Umwelteinflüssen schützt. Insbesondere umfasst eine solche Schwarz-Weiß-Anlage eine mit einem Filtersystem gekoppelte Überdruckkabine, die den Eintritt von Gasen und Stäuben in die Fahrerkabine verhindert.

Die Erfindung wird nachfolgend anhand der in den Zeichnungen dargestellten Ausführungsbeispielen näher erläutert. Es zeigen:
- Figur 1: in der Seitenansicht eine erste Ansicht der erfindungsgemäßen Vorrichtung;
- Figur 2: die Vorrichtung der Figur 1 in einem anderen Einsatzfall;
- Figur 3: die Vorrichtung der Figur 1 in einem weiteren Einsatzfall;
- Figur 4: die erfindungsgemäße Vorrichtung bei der Aufnahme von kontaminierenden Substanzen aus niedrigem Gewässer;
- Figur 5: die erfindungsgemäße Vorrichtung der Figur 4 in der Draufsicht;
- Figur 6: die erfindungsgemäße Vorrichtung mit seitlichen Schwimmkörpern.

Mit 1 ist eine Vorrichtung zur Aufnahme von kontaminierenden Substanzen, insbesondere von Öl bezeichnet. Die Vorrichtung 1 besteht im wesentlichen aus vier Baugruppen. Die erste Baugruppe ist eine Rotorwalze 2, die zweite Baugruppe ist ein die Rotorwalze 2 aufnehmender Walzenrahmen 3. Die dritte Baugruppe ist ein sich in gleicher Richtung wie der Walzenrahmen 3 erstreckender Tragrahmen 4. Die vierte Baugruppe ist ein Sammelbehälter 5, der unterhalb des Tragrahmens 4 und des Walzenrahmens 3 angeordnet ist und in Arbeitsrichtung A nach vorne durch die Rotorwalze 2 begrenzt ist und rückwärtig durch eine Rückwand 6 geschlossen ist. Der Tragrahmen 4 ist über ein Lager 7 im oberen Bereich der Seitenwand 8 schwenkbeweglich gegenüber dem Sammelbehälter 5 gelagert. Die Verschwenkung erfolgt über einen Hubzylinder 9, der mit seinem einen Ende in der von der Bodenplatte 10 des Sammelbehälters 5 und der Rückwand 6 des Sammelbehälters 5 gebildeten Ecke befestigt ist. Das obere Ende 11 des Hubzylinders 9 ist an dem über die Rückwand 6 hinausragenden Endabschnitt 12 des Tragrahmens 4 angeschlagen. An dem Endabschnitt 12 ist ferner eine Tragrolle 13 mit in die Bildebene hineinragender Längsachse LA befestigt, auf der ein mit unterbrochener Linie dargestelltes Bandmaterial 14 aufgenommen ist. Es dient zur Auskleidung des Sammelbehälters 5 zum Schutz vor Anbackungen durch kontaminierendes Material.

Die gesamte Vorrichtung 1 ist an einem nicht näher dargestellten Kraftfahrzeug, insbesondere einem Radlader, befestigt, der die Vorrichtung in Arbeitsrichtung A vor sich her führt. An dem schräg nach unten auf die kontaminierte Oberfläche 15 weisenden Walzenrahmen 3 ist jeweils seitlich der Rotorwalze 2 eine Stützkufe 16 befestigt. Die Stützkufe 16 ist mit ihrem vorderen nach oben weisenden Ende 17 gelenkig an dem über die Rotorwalze 2 hinausragenden Ende 18 des Walzenrahmens 3 befestigt. Der horizontal verlaufende Längenabschnitt 19 der Stützkufe 16 erstreckt sich in Richtung des Sammelbehälters 5 an der Rotorwalze 2 vorbei und ist über eine Stütze 20 hinter der Rotorwalze 2 wiederum mit dem Walzenrahmen 3 verbunden. Die Stütze 20 ist als Spindel konfiguriert, wobei über eine Kurbel 21 eine manuelle Höhenverstellung der Stützkufen 16 möglich ist. Selbstverständlich kann die Stütze 20 auch hydraulisch ausgeführt sein, so dass für eine Verstellung der Arbeitstiefe der Fahrer des Kraftfahrzeugs das Fahrzeug nicht verlassen und den kontaminierten Bereich betreten muss.

Die Rotorwalze 2 bzw. die Stützkufen 16 liegen nicht mit ihrem vollen Eigengewicht auf der Oberfläche 15 auf. Eine Federkraft F, aufgebracht von einer schematisch angedeuteten Feder 22 wirkt entgegen der Schwerkraft S der Rotorwalze 2. Die Vorspannung der Feder 22 ist einstellbar. Die Feder 22 ist einerseits an dem Tragrahmen 4 befestigt und andererseits an dem Walzenrahmen 5. Die Kraftvektoren der Schwerkraft S und der Federkraft F können entgegengesetzt sein oder im Winkel zueinander stehen. Die entgegen der Schwerkraft S wirkende Federkraft F verhindert ein Einsinken der Stützkufen 6 auf weichem Untergrund und erleichtert die Auslenkung des Walzenrahmens 3 um das Schwenklager 23 in Richtung des Pfeils PF. Die Achse des Schwenklagers 23 ist parallel zur Längsachse LA1 zur Rotorwalze 2.

Die Rotorwalze 2 wird von einer Antriebseinheit 24 in Rotationsbewegung versetzt, wobei die Drehrichtung durch den Pfeil D verdeutlicht ist. Die Antriebseinheit 24 ist vorzugsweise ein Ölmotor, der durch den Hydraulikkreis des nicht näher dargestellten Kraftfahrzeugs gespeist wird. Die Antriebseinheit 24 befindet sich oberhalb der Rotorwalze 2 und ist über ein nicht näher dargestelltes Getriebe innerhalb eines Getriebegehäuses 25 mit der Rotorwalze kraftschlüssig verbunden. Die Rotorwalze 2 ist über ein halbkreisförmiges Abdeckblech 26 nach vorne hin bedeckt. Im Bereich seiner vorderen unteren Kante ist eine höhenverstellbare Gummischürze 27 befestigt. Das Abdeckblech 26 sowie die Gummischürze 27 verhindern, dass aufgenommenes Material durch die Rotationsbewegung der Rotorwalze 2 umhergeschleudert wird. Das Abdeckblech 27 ist in geringem Abstand zum Umfang der Rotorwalze 2 positioniert. Beispielsweise kann der Abstand nur wenige Millimeter betragen. Vorzugsweise 5 bis 20 mm. Das Abdeckblech 26 hat somit eine Leitfunktion zur Überführung des aufgenommenen Material in den Sammelbehälter. Durch die Rotationsbewegung wird das aufgenommene Material, beispielsweise Ölklumpen 28, nach oben über die Längsachse LA1 der Rotorwalze 2 hinweg gefördert und über eine Trennwand 29 in den Sammelbehälter 5 geschleudert. Dem Abdeckblech 25 ist eine weitere Abdeckung 30 nachgeschaltet, welche sich über den Sammelbehälter 5 erstreckt und den Austritt von Stäuben und auch von kontaminiertem Material verhindert. Die Trennwand 29 ist lösbar einerseits an der Bodenplatte 10 des Sammelbehälters 5 und im oberen Bereich am Querholm 31 befestigt.

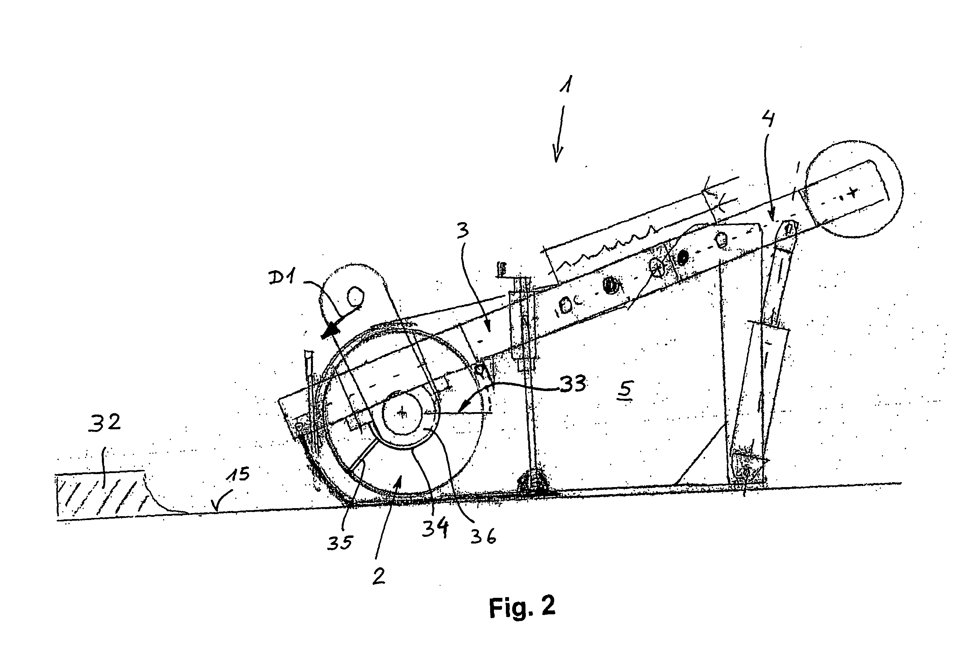

Figur 2 zeigt eine Ausführungsform ohne diese Trennwand 29. Bei dieser Variante ist die Drehrichtung D1 umgekehrt, so dass die Materialaufnahme durch ein Hindurchfördern unterhalb der Rotorwalze 2 erfolgt. Abhängig von der Baugröße und der Konfiguration der Rotorwalze kann beispielsweise Material in einer Schichtdicke von 0 bis 15 cm aufgenommen werden. Beispielsweise ein kompakter Ölteppich 32 auf einem Strandabschnitt 15. Die Drehrichtungsumkehr kann durch umgekehrte Ansteuerung des Hydraulikmotors erfolgen.

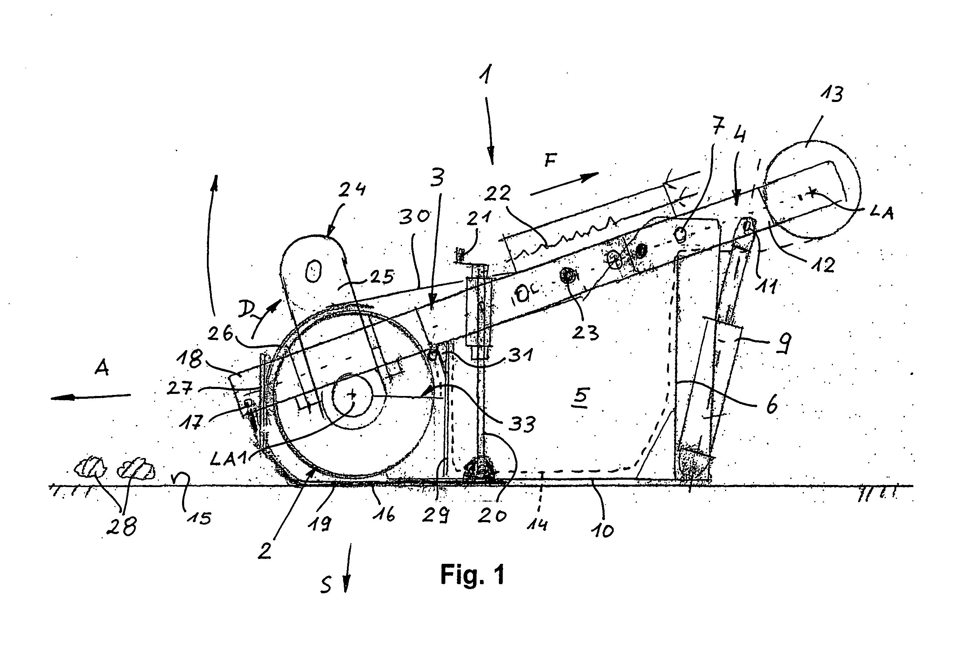

Selbstverständlich ist auch eine getriebetechnische Veränderung der Drehrichtung möglich. Im übrigen entspricht die Ausführungsform der Figur 2 derjenigen der Figur 1. Im Bereich des Querholms 31 befindet sich auf seiner der Rotorwalze 2 zugewandte Seite ein schematisch angedeuteter Abstreifer 33, der anhaftendes Material von der Rotorwalze 2 abstreift. Figur 2 verdeutlicht schematisch den Aufbau der Rotorwalze 2, die im wesentlichen aus einer Hohlwelle besteht, die sogenannte Rotortrommel 34, auf der radial abstehende Aufnahmekörper 35 befestigt sind. Die Aufnahmekörper 35 sind vorzugsweise Rundbolzen mit glatter Oberfläche, die über ein nicht näher dargestelltes Gewinde mit der Rotortrommel verschraubt sind. Die Aufnahmekörper gliedern sich in nicht näher dargestellter Weise in zwei Gruppen. Innerhalb jeder Gruppe sind die einzelnen radial abstehenden Aufnahmekörper 35 wendelförmig über den Umfang der Rotortrommel 34 verteilt. Die Wendeln sind jedoch gegenläufig, so dass aufgenommenes Material je nach Drehrichtung entweder zur Mitte der Rotorwalze oder nach außen gefördert wird. Die Drehrichtung ist stets so gewählt, dass aufgenommenes Material zur Mitte der Rotorwalze geführt wird. Bei Drehrichtungsumkehr kann die Rotorwalze daher aus dem Lager 36 genommen und einfach umgesteckt werden.

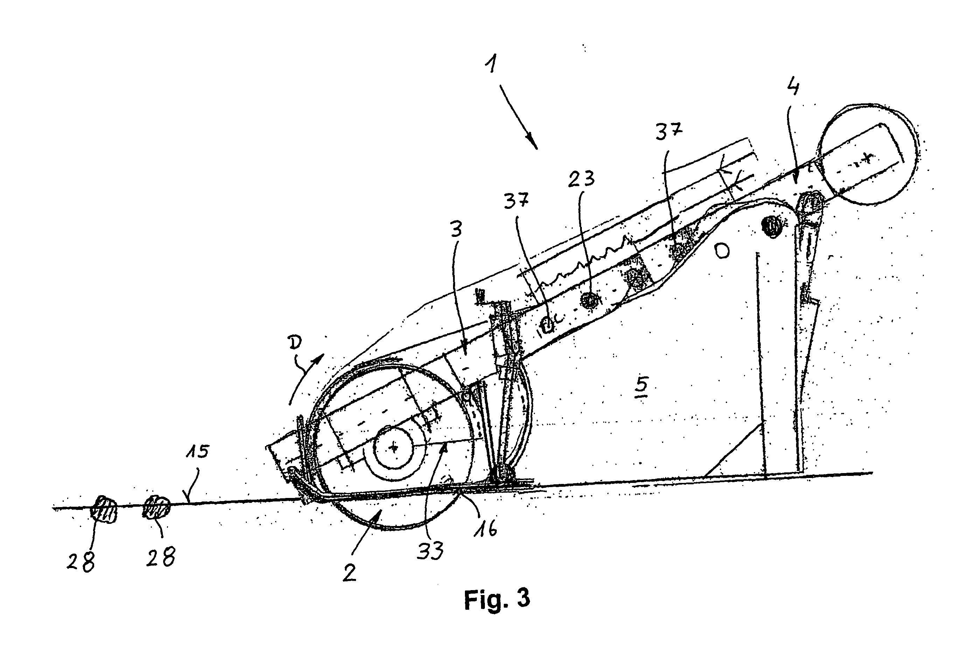

Figur 3 zeigt einen Anwendungsfall, bei welchem nicht nur die auf der Oberfläche 15 aufliegenden Ölklumpen 28 erfasst werden, sondern auch Ölklumpen 28, die bereits in die Oberfläche 15 eingebettet sind. Bei gleicher Drehrichtung D wie in Figur 1 ist die Arbeitstiefe jedoch so eingestellt, dass die Rotorwalze 2 bis unter die Oberfläche 15 ragt, d.h. die Rotorwalze 2 greift zwischen die Stützkufen 16. Um eine größere Arbeitstiefe zu erreichen ohne mit dem Sammelbehälter 5 zu kollidieren, sind in dem Tragrahmen 4 und dem Walzenrahmen 3 mehrere Bohrungen 37 vorgesehen, so dass das Schwenklager 23 durch Umstecken eines nicht näher dargestellten Bolzens umpositioniert werden kann. Bei dieser Variante kann beispielsweise ein Bereich von 10 cm unterhalb der Oberfläche 15 von kontaminierten Substanzen wie z.B. den Ölklumpen 28 gereinigt werden.

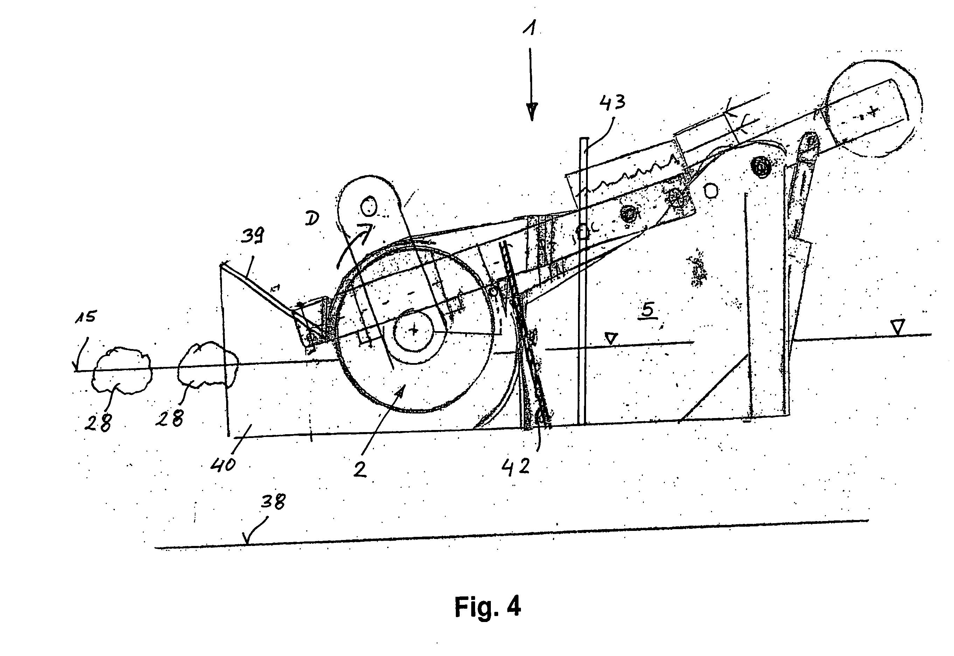

In dem Anwendungsfall der Figur 4 wird die zuvor beschriebene Vorrichtung 1 durch niedriges Gewässer geführt. Die Vorrichtung 1 liegt hierbei nicht auf dem Grund 38 auf, sondern wird von dem Kraftfahrzeug in einer bestimmten Höhe geführt. Hierbei ist anstelle der Gummischürze 27 ein oberes Leitblech 39 vorgesehen, das zwei seitliche Leitbleche 40, 41 miteinander verbindet, so dass vor der Rotorwalze 2 eine trichterförmige Mündung ausgebildet ist. Die Oberfläche im Sinne des Patentanspruchs 1 von der die kontaminierenden Substanzen aufgenommen werden sollen, ist bei diesem Anwendungsfall der Wasserstand 15, auf dem die kontaminierten Substanzen schwimmen, wie z.B. Ölklumpen 28. Der Wasserstand kann beispielsweise 50 cm betragen, wobei die Rotorwalze 2 bis zu 30 cm unter die Oberfläche 15 d.h. unter den Wasserspiegel reicht und durch die Drehrichtung D die kontaminierenden Substanzen in den Sammelbehälter 5 überführt. Anstelle der Trennwand 29 ist ein Wasseraustrittsblech 42 in dem Sammelbehälter 5 montiert. Durch das Wasseraustrittsblech 42 soll das durch das eingesammelte Material verwendete Wasser unterhalb der Wasserlinie 15 aus dem Sammelbehälter 5 herausgepresst werden. Eine schematisch angedeutete Anzeige 43 dient zur Signalsierung des Füllgrades. Anstelle eines Radladers kann im Bereich von Gewässern auch ein Kettenfahrzeug zum Einsatz kommen.

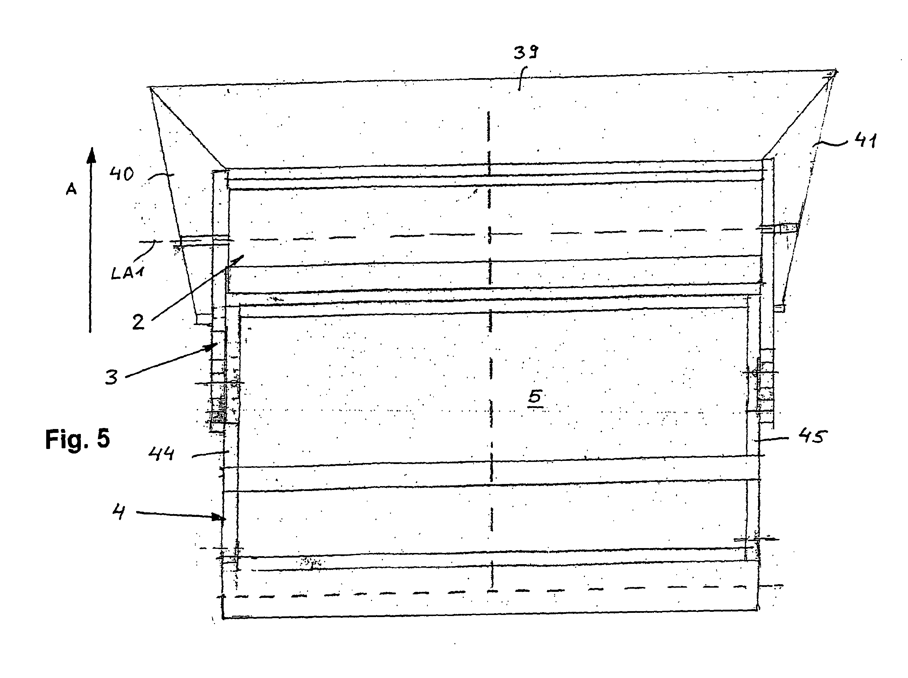

Figur 5 veranschaulicht noch einmal die Konfiguration der trichterförmigen Mündung, die durch die seitlichen Leitbleche 40, 41 sowie das obere Leitblech 39 gebildet ist. Die Rotorwalze 2 ist ebenfalls schematisch angedeutet ebenso wie der Tragrahmen 4, der mit seinen sich in Arbeitsrichtung erstreckenden Armen 44, 45 zwischen dem Walzenrahmen 3 greift.

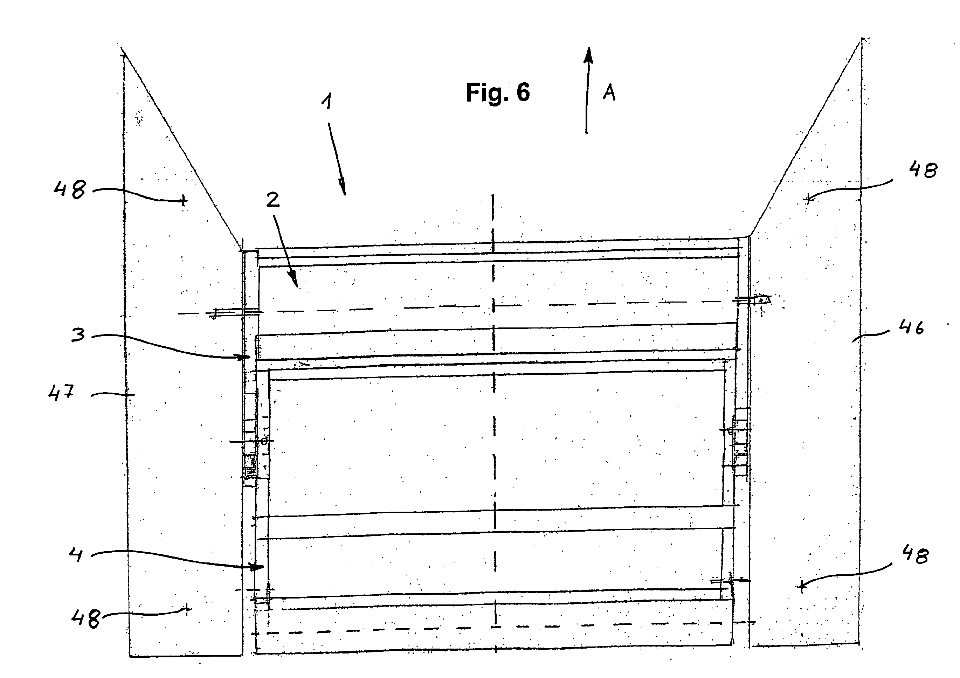

In der Variante der Figur 6 ist die Vorrichtung 1 schwimmfähig ausgebildet. Dies wird durch seitlich der Vorrichtung 1 angebrachte Schwimmkörper 46, 47 erreicht, die im Bereich vor der Rotorwalze 2 einen Trichter ausbilden, so dass die Arbeitsbreite der gesamten Vorrichtung 1 größer ist als die Breite der Rotorwalze 2. Im übrigen entspricht diese Konfiguration im wesentlichen derjenigen der Figur 4 mit dem Unterschied, dass keine Leitbleche vorhanden sind und dass die Vorrichtung nicht durch ein Kraftfahrzeug geführt wird, sondern vorzugsweise über einen Kran zu Wasser gelassen wird, der beispielsweise an dem mit 48 bezeichneten Anschlagpunkt über Seile oder Ketten an der Vorrichtung 1 bzw. den Schwimmkörpern 46, 47 angeschlagen wird. Der Antrieb kann über einen Ölmotor oder über einen Elektromotor erfolgen, wobei die notwendige Energie von einem Schiff bereitgestellt wird. Ist der Sammelbehälter 5 voll, wird die komplette Vorrichtung 1 aus dem Wasser herausgehoben und über den Bunker des Schiffes geschwenkt. Über den Hubbolzen wird der Sammelbehälter gekippt, so dass die aufgenommenen kontaminierenden Substanzen insbesondere Öl nach unten herausfallen kann. Im Off-shore-Bereich kann die erfindungsgemäße Vorrichtung deutlich größer gestaltet sein als für den Einsatz an Land.

### Bezugszeichenaufstellung:

- 1 -: Vorrichtung
- 2 -: Rotorwalze
- 3 -: Walzenrahmen
- 4 -: Tragrahmen
- 5 -: Sammelbehälter
- 6 -: Rückwand von 5
- 7 -: Lager in 8
- 8 -: Seitenwand von 5
- 9 -: Hubzylinder
- 10 -: Bodenplatte von 5
- 11 -: oberes Ende von 9
- 12 -: Endabschnitt von 4
- 13 -: Tragrolle
- 14 -: Bandmaterial auf 13
- 15 -: Oberfläche
- 16 -: Stützkufe
- 17 -: Ende von 16
- 18 -: Ende von 3
- 19 -: Längenabschnitt von 16
- 20 -: Stütze
- 21 -: Kurbel von 20
- 22 -: Feder
- 23 -: Schwenklager
- 24 -: Antriebseinheit
- 25 -: Getriebegehäuse
- 26 -: Abdeckblech
- 27-: Gummischürze
- 28 -: Ölklumpen (kontaminierende Substanzen)
- 29 -: Tennwand
- 30 -: Abdeckung von 5
- 31 -: Querholm von 5
- 32 -: Ölteppich an 15 (kontaminierende Substanzen)
- 33 -: Abstreifer
- 34 -: Rotortrommel von 2
- 35 -: Aufnahmekörper
- 36 -: Lager
- 37 -: Bohrung
- 38 -: Grund
- 39 -: Leitblech
- 40 -: Leitblech
- 41 -: Leitblech
- 42 -: Wasseraustrittsblech
- 43 -: Anzeige
- 44 -: Arm von 4
- 45 -: Arm von 4
- 46 -: Schwimmkörper
- 47 -: Schwimmkörper
- 48 -: Anschlagpunkt

- A -: Arbeitsrichtung
- LA -: Längsachse von 13
- F -: Federkraft
- S -: Schwerkraft
- PF -: Auslenkung von 3
- LA1 -: Längsachse
- D -: Drehrichtung von 2
- D1 -: Drehrichtung von 2

## Patentansprüche

1. Vorrichtung zur Aufnahme von kontaminierenden Substanzen, insbesondere von Öl, welche gegenüber einer kontaminierten Oberfläche (15) relativ verlagerbar ist, umfassend einen Sammelbehälter (5) und eine dem Sammelbehälter (5) vorgelagerte motorisch angetriebenen Rotorwalze (2), die umfangsseitig mit Aufnahmekörpern (35) besetzt ist, welche durch die quer zur Längsachse (LA1 ) der Rotorwalze (2) ausgeführte Relatiwerlagerung und die Rotationsbewegung der Rotorwalze (2) die kontaminierenden Substanzen (28) in den Sammelbehälter (5) befördern, wobei die Rotorwalze (2) in einem Walzenrahmen (3) gehalten ist, der wiederum schwenkbeweglich gegenüber einem Tragrahmen (4) gelagert ist und wobei zur schwimmenden Lagerung der Rotorwalze (2) eine zumindest mittelbar gegen die Schwerkraft (S) der Rotorwalze (2) gerichtete Federkraft (F) zwischen dem Walzenrahmen (3) und dem Tragrahmen (4) wirkt und wobei zur Einstellung der Aufnahmetiefe der Rotorwalze (2) die Federkraft einstellbar ist und/oder das Schwenklager (23) zwischen Walzenrahmen (3) und Tragrahmen (4) lageveränderbar ist.

2. Vorrichtung nach Anspruch 1, **dadurch gekennzeichnet, dass** sie ein Frontanbaugerät für ein Kraftfahrzeug ist.

3. Vorrichtung nach Anspruch 1 oder 2, **dadurch gekennzeichnet, dass** der Tragrahmen (4) gegenüber dem Sammelbehälter (5) hydraulisch verschwenkbar ist.

4. Vorrichtung nach einem der Ansprüche 1 bis 3, **dadurch gekennzeichnet, dass** seitlich der Rotorwalze (2) Stützmittel (16) vorgesehen sind.

5. Vorrichtung nach Anspruch 4, **dadurch gekennzeichnet, dass** die Stützmittel (16) mit dem Walzenrahmen (3) gekoppelt sind.

6. Vorrichtung nach einem der Ansprüche 1 bis 5, **dadurch gekennzeichnet, dass** die Aufnahmekörper (35) der Rotorwalze (2) in eine erste Gruppe und eine zweite Gruppe gegliedert sind, wobei die Aufnahmekörper (35) der ersten und zweiten Gruppe in zueinander gegenläufigen Wendeln angeordnet sind und durch die Drehrichtung (D, D1) der Rotorwalze (2) ein Materialtransport zur Mitte der Rotorwalze (2) gegeben ist.

7. Vorrichtung nach einem der Ansprüche 1 bis 6, dass die Aufnahmekörper (35) radial von einer Rotortrommel (34) abstehende lösbar befestigte Rundbolzen mit glatter Oberfläche sind.

8. Vorrichtung nach einem der Ansprüche 1 bis 7, **dadurch gekennzeichnet, dass** die Rundbolzen über ein endseitiges Außengewinde mit der Rotortrommel (34) verschraubt sind.

9. Vorrichtung nach einem der Ansprüche 1 bis 8, **dadurch gekennzeichnet, dass** die Rotorwalze (2) und/oder der Sammelbehälter unter Wasserbedüsung stehen.

10. Vorrichtung nach einem der Ansprüche 1 bis 9, **dadurch gekennzeichnet, dass** der Sammelbehälter (5) und/oder die Rotorwalze (2) beheizt sind.

11. Vorrichtung nach Anspruch 10, **dadurch gekennzeichnet, dass** der Sammelbehälter (5) und/oder die Rotorwalze (2) mit Verbrennungsgasen beheizt sind.

12. Vorrichtung nach einem der Ansprüche 1 bis 11, **dadurch gekennzeichnet, dass** in den Sammelbehälter (5) benachbart zur Rotorwalze (2) eine Trennwand eingesetzt ist.

13. Vorrichtung nach einem der Ansprüche 1 bis 12, umfassend ein auf einer Tragrolle (13) bevorratetes Bandmaterial (14) zur Auskleidung des Sammelbehälters (5).

14. Vorrichtung nach einem der Ansprüche 1 bis 13, **dadurch gekennzeichnet, dass** der Rotorwalze (5) zumindest auf einem Teilbereich ihres Umfangs ein Abeckblech (26) zugeordnet ist.

15. Vorrichtung nach einem der Ansprüche 1 bis 14, **dadurch gekennzeichnet, dass** die Aufnahmekörper (35) in kämmenden Eingriff mit einem Abstreifer (33) stehen.

16. Vorrichtung nach einem der Ansprüche 1 bis 15, **dadurch gekennzeichnet, dass** Leitbleche (39, 40, 41) vorgesehen sind, durch welche vor der Rotorwalze (2) eine trichterfömige Mündung ausgebildet ist.

17. Vorrichtung nach einem der Ansprüche 1 bis 16, **dadurch gekennzeichnet, dass** durch Schwimmkörper (46, 47) Schwimmfähigkeit hergestellt ist.

18. Vorrichtung nach Anspruch 17, **dadurch gekennzeichnet, dass** dass die Rotorwalze (2) durch Schwimmkörper (46, 47) in einer einstellbaren Arbeitshöhe gehalten ist.

19. Vorrichtung nach Anspruch 17 oder 18, **dadurch gekennzeichnet, dass** durch die Geometrie der Schwimmkörper (46, 47) ein Trichter vor der Rotorwalze (2) ausgebildet ist.

20. Vorrichtung nach Anspruch 19, **dadurch gekennzeichnet, dass** sich der Sammelbhälter (5) teilweise unterhalb der Wasserlinie (15) befindet und unterhalb der Wasserlinie (15) wenigstens eine Wasseraustrittsöffnung im Sammelbehälter (5) vorgesehen ist.

21. Vorrichtung nach einem der Ansprüche 1 bis 20, **dadurch gekennzeichnet, dass** der Sammelbehälter (5) an seiner Oberseite verschließbar ist.
